# FASCICULE DE BREVET EUROPEEN

(11) **EP 3 227 155 B1**
(45) Date de publication et mention de la délivrance du brevet: **30.12.2020**
(21) Numéro de dépôt: 15808716.3
(22) Date de dépôt: 12.11.2015
(51) Int. Cl.: B60W 40/08, B60W 30/08, B60R 21/00

(54) **PROCÉDÉ D'ASSISTANCE À AU MOINS UN OCCUPANT D'UN VÉHICULE ACCIDENTÉ ET SYSTÈME D'ASSISTANCE DÉDIÉ**
VERFAHREN ZUR UNTERSTÜTZUNG VON MINDESTENS EINEM INSASSEN EINES VON EINEM UNFALL BETROFFENEN FAHRZEUGS UND DEDIZIERTES HILFSSYSTEM
METHOD OF ASSISTANCE TO AT LEAST ONE OCCUPANT OF AN ACCIDENT AFFECTED VEHICLE AND DEDICATED ASSISTANCE SYSTEM

(30) Priorité: 02.12.2014 FR 1461781
(43) Date de publication de la demande: 11.10.2017
(73) Titulaire: Renault S.A.S., 92100 Boulogne-Billancourt (FR)
(72) Inventeur: DEL-FABBRO, Laetitia, F-78180 78180 Montigny le Bretonneux (FR); DARMOUNI, Denis, F-92360 Meudon-la-Foret (FR); PETIT-BOULANGER, Claire, F-78280 Guyancourt (FR)
(86) Numéro de dépôt international: PCT/FR2015/053056
(87) Numéro de publication internationale: WO 2016/087734

(56) Documents cités:
- DE-A1-102004 016 191
- DE-A1-102011 000 277
- US-A1- 2013 338 851

## Description

La présente invention se rapporte de manière générale au domaine de l'automobile, et concerne plus précisément un procédé d'assistance à au moins un occupant d'un véhicule, notamment dans le cadre d'un service d'urgence après un accident.

Dans la plupart des services d'intervention déployés après un accident d'un véhicule, les unités mobiles de secours constatent uniquement une fois présentes sur le lieu de l'accident, la gravité de celui-ci ainsi que l'état physiologique de chacun des occupants d'un véhicule. Bien souvent pourtant la connaissance de l'évolution de leur état physiologique est essentielle pour diagnostiquer avec précision la nature des premiers secours devant leur être prodigués.

Certains constructeurs proposent des systèmes de communications embarqués dans les véhicules qui, de manière autonome, permettent d'établir une communication avec des centres d'appel de premiers secours, de sorte que par exemple les coordonnées de géolocalisation du véhicule accidenté puissent être transmises. Ainsi, l'envoi des données de géolocalisation du véhicule sur un territoire donné permet de dépêcher plus rapidement les unités mobiles de secours sur le lieu de l'accident.

Il est aussi connu que parallèlement à cette communication des données, il peut être aussi établi une communication téléphonique entre une victime de l'accident et un centre d'appel d'urgence dédié. Cet appel est utile pour confirmer la situation réelle de l'accident, mais aussi pour communiquer la gravité de l'accident et l'état de santé des occupants.

Malgré de tels systèmes, la victime ou le témoin d'un accident n'est pas toujours en mesure d'informer de manière fiable son état physiologique, ni même celui des autres passagers du véhicule accidenté.

Pourtant ces données sont, d'avis de professionnels, essentielles pour l'analyse de la gravité de l'accident. Malgré le déploiement de systèmes perfectionnés existants, les équipes de premier secours ne constatent que tardivement la situation réelle de l'accident ainsi que l'état physiologique de chacun des occupants du véhicule, seulement lorsqu'elles arrivent physiquement sur le lieu même de l'accident.

L'intervalle de temps entre l'accident du véhicule et l'arrivée des équipes de première intervention sur les lieux même de l'accident est pourtant précieux puisque l'état de santé de chaque utilisateur évolue rapidement, d'autant plus rapidement que la gravité de l'accident est élevée.

Un des buts de l'invention est de remédier à au moins une partie des inconvénients susmentionnés, en proposant un procédé et un système d'assistance à au moins un occupant d'un véhicule accidenté qui est apte à communiquer au moins l'état physiologique de chaque occupant du véhicule, voire des données relatives au véhicule accidenté.

On entend par un état physiologique d'un occupant, les données qui tout du moins sont représentatives de la fréquence cardiaque et de la fréquence respiratoire de l'occupant.

A cette fin, l'objet de l'invention a trait à un procédé d'assistance à au moins un occupant d'un véhicule accidenté comportant une étape de détection d'un état accidenté du véhicule, une étape d'activation des moyens de mesure de l'état physiologique de l'occupant, une étape de relève des données physiologiques de l'occupant par au moins un dispositif de mesure dédié, une étape d'enregistrement des données relevées, une étape d'envoi d'un message contenant les données relatives à l'état physiologique de l'occupant vers un serveur distant de stockage des données, via une unité de contrôle télématique embarquée dans le véhicule, comme cela est connu dans des documents DE 10 2011 000 277 - A1 et DE 10 2004 019 191 - A1.

Selon l'invention, l'étape de relève des données physiologiques s'effectue de manière récurrente à intervalle de temps régulier à partir de l'instant de détection d'un état accidenté du véhicule, et l'étape d'envoi d'un message s'effectue automatiquement après chaque enregistrement des données relevées à l'étape de relève des données.

Il est à noter que dans cette demande le terme « distant » appliqué à un serveur signifie que le serveur est situé à distance du véhicule.

Grâce à l'invention, le procédé d'assistance à au moins un occupant d'un véhicule accidenté et le système associé permettent de créer en concomitance une communication relative à la situation d'accident et une communication relative à l'évolution physiologique d'au moins un des occupants du véhicule à destination d'au moins une unité mobile de première intervention qui sera dépêchée sur le lieu de l'accident. Par l'utilisation d'un système rendant apte la mise en œuvre du procédé objet de l'invention, l'unité mobile de premiers secours est à même d'anticiper et de prioriser les secours devant être prodigués aux occupants du véhicule accidenté selon l'évolution de leur état physiologique respectif. Avec l'étape de relève des données physiologiques selon l'invention, la communication s'effectue de façon cadencée dans le temps de sorte qu'elle réduit significativement la consommation d'énergie nécessaire.

Contrairement aux systèmes de l'art antérieur, dans l'invention l'état physiologique de chacun des occupants est une donnée capitale qui est avantageusement valorisée via un suivi de l'état de santé stationnaire ou évolutif dans le temps.

Selon une caractéristique avantageuse du procédé d'assistance de l'invention l'étape de relève des données physiologiques s'effectue durant un laps de temps prédéterminé, qui correspond approximativement au délai moyen constaté d'intervention des équipes de première intervention sur les lieux de l'accident.

A titre d'exemple, la récurrence s'effectue toutes les 10 secondes durant un laps de temps de 30 minutes.

Les moyens ainsi utilisés pour suivre l'état physiologique de chacun des occupants sont ainsi utilisés seulement dès lors qu'un état accidenté du véhicule est effectif.

Selon une autre caractéristique du procédé d'assistance selon l'invention, l'étape de détection d'un état accidenté du véhicule consiste en une identification de l'état déclenché d'au moins un airbag ou en une identification d'une valeur de la mesure instantanée d'un décéléromètre embarqué dans le véhicule supérieure à une valeur de seuil prédéterminée. L'occupant n'est pas dans l'obligation de commander manuellement un signal de détresse. Le véhicule fonctionne de manière totalement autonome en ce sens qu'il agit selon l'état de certains équipements de sécurité qui sont embarqués dans le véhicule, tels que les airbags ou le décéléromètre relié à une unité électronique de commande, cette dernière étant apte à transposer la violence du choc en un signal de commande du déclenchement des airbags.

Selon une caractéristique avantageuse du procédé d'assistance selon l'invention, ce dernier comprend une étape de relève de données relatives au véhicule réalisée en concomitance de l'étape de relève des données physiologiques de l'occupant. Cela permet une information d'importance qui sera ensuite exploitée par les premiers secours, car selon les données mesurées sur le véhicule, l'intervention des premiers secours est adaptée.

Selon une autre caractéristique du procédé d'assistance, les données relatives à l'état du véhicule sont les coordonnées de géolocalisation et/ou la vitesse instantanée de déplacement du véhicule mesurée durant un instant prédéterminé précédent l'accident et/ou l'identification du véhicule et/ou l'intensité du choc et/ou l'état de chacun des airbags. Ces données permettent à une unité mobile de secours d'anticiper la nature des premiers secours à dispenser avant leur arrivée sur le lieu de l'accident. De telles données permettent avantageusement d'évaluer l'impact du choc de l'accident et d'anticiper le traumatisme subit par les occupants du véhicule.

Selon une caractéristique du procédé d'assistance, le serveur distant de stockage des données est apte à recevoir des données du constructeur concernant des caractéristiques relatives au véhicule accidenté. En connaissant l'identification du véhicule accidenté, le serveur distant de stockage de données est ainsi en mesure d'interroger une base de données renseignées par les constructeurs afin d'obtenir des informations d'aide à la décision telle que par exemple la procédure de désincarcération ou l'inhibition des organes susceptibles d'être dangereux, comme une réserve de gaz, la nature du fluide frigorigène du système de climatisation par exemples, mais aussi les différents messages rendant apte l'arrêt des actionneurs embarqués.

Selon encore une caractéristique avantageuse du procédé d'assistance, ce dernier comprend une étape préliminaire d'identification de l'occupant consistant notamment en une demande d'identification comprenant une étape de relève de la signature cardiaque de l'occupant par au moins un dispositif de mesure dédié, une étape d'enregistrement dans une mémoire du véhicule, de sorte que le véhicule est apte à créer une reconnaissance individuelle et personnelle de chacun des occupants du véhicule via sa propre signature cardiaque.

De manière avantageuse, le procédé d'assistance comprend également une étape d'autorisation permettant au serveur distant de stockage des données d'accéder à un dossier électronique médical individuel qui est rattaché à l'occupant identifié. Ainsi, les unités mobiles de secours peuvent adapter leurs diagnostics médicaux selon les antécédents médicaux.

De manière remarquable, le procédé d'assistance comprend aussi une étape d'établissement d'une voie de communication d'informations entre le serveur distant de stockage des données et une interface graphique destinée à être utilisée par une unité mobile de secours, une étape d'envoi des données du serveur distant de stockage des données vers l'interface graphique de manière à permettre un suivi de l'évolution de l'état physiologique de chacun des occupants du véhicule accidenté. L'interface graphique est notamment apte à recevoir et utiliser l'ensemble des données qui ont été rassemblées puis communiquées par le serveur distant de stockage des données. De préférence une telle communication est établie selon un protocole de communication habituellement utilisé dans les réseaux de télécommunications.

Enfin le procédé d'assistance de l'invention peut comprendre avantageusement une étape d'établissement d'une communication distante entre l'interface graphique et le véhicule, une étape d'envoi de l'interface graphique vers l'unité de contrôle télémétrique du véhicule d'un message de commande d'un actionneur électrique, une étape de transmission du message entre l'unité de contrôle télématique et l'unité électronique de commande reliée à l'actionneur considéré. L'actionneur peut être un airbag, de sorte que son fonctionnement, jugé instable par l'unité mobile de secours, peut être inhibé en forçant sa mise à l'état d'arrêt. Ainsi, l'unité mobile de secours, souvent confrontée à des états instables des airbags peut selon le cas d'espèce, commander l'arrêt de tout airbag n'ayant pas été déclenché lors du choc. Le risque de déclenchement intempestif post-accident d'un airbag non-déclenché est ainsi fortement réduit.

L'invention concerne aussi un système d'assistance à au moins un occupant d'un véhicule accidenté, qui comporte des moyens de mise en œuvre du procédé d'assistance susmentionné, lesquels moyens comportent :
- au moins un capteur de mesure de l'état physiologique d'au moins l'un des occupants d'un véhicule
- une unité de contrôle télématique embarquée dans le véhicule communicant avec ledit capteur,
- un serveur distant de stockage des données équipé d'au moins un calculateur et un émetteur/récepteur de données destiné à recevoir des données émises par une unité de contrôle télématique embarquée dans le véhicule et/ou par au moins une base de données externe contenant les données relatives au véhicule accidenté et/ou au dossier électronique médical individuel d'un occupant identifié,
- une interface graphique comportant au moins un calculateur et un émetteur/récepteur de données apte à communiquer avec le serveur distant de stockage des données pour permettre un suivi de l'évolution de l'état physiologique d'au moins un occupant du véhicule.

Ladite interface graphique comportant au moins un calculateur et un émetteur/récepteur de données peut également être apte à communiquer avec l'unité de contrôle télématique embarquée dans le véhicule afin de désactiver au moins un actionneur piloté par cette unité.

D'autres caractéristiques et avantages apparaîtront à la lecture d'un mode de réalisation préféré décrit en référence aux figures dans lesquelles :
- la figure 1 représente un schéma de principe d'un système permettant une mise en œuvre du procédé d'assistance à un occupant d'un véhicule accidenté, selon l'invention, dans un mode de réalisation préféré,
- la figure 2 représente de manière schématique les différents éléments fonctionnels du système de la figure 1, dans un mode de réalisation préféré,
- la figure 3 représente un algorithme de fonctionnement du procédé d'assistance à un occupant d'un véhicule accidenté, selon l'invention,
- les figures 4 à 6 représentent différentes variantes de l'algorithme de la figure 3, selon l'invention.

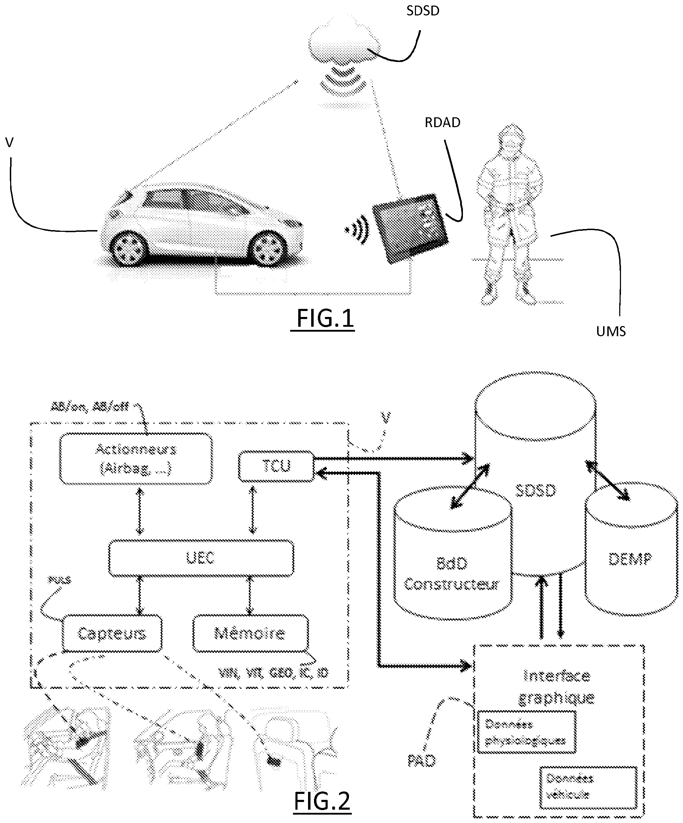

Selon un mode préféré de réalisation de l'invention représenté à la **figure 1**, le système permettant la mise en œuvre du procédé d'assistance à au moins un occupant d'un véhicule accidenté comprend un véhicule V communicant via un protocole de télécommunication connu qui utilise par exemple un réseau de télécommunication de type 3G ou 4G, vers un serveur distant SDSD. Pour ce faire, le véhicule peut comprendre un système embarqué connu sous l'acronyme anglais TCU pour la désignation d'une Unité Télématique de Contrôle. Un tel système est avantageusement apte à communiquer des données mesurées par des capteurs présents dans le véhicule.

A titre d'exemple, de tels capteurs peuvent être notamment dédiés à la mesure du rythme cardiaque de chaque occupant du véhicule et peuvent être disposés dans l'habitacle du véhicule, selon une incorporation dans le siège ou la ceinture de sécurité à titre d'exemple. De préférence, de tels capteurs restent dans un état de veille afin de réduire les consommations d'énergie. Afin de rendre apte leur fonctionnement, de tels capteurs doivent préalablement être activés, comme cela sera détaillé par la suite. Les capteurs peuvent en outre être combinés à des moyens de prise de vue, telle qu'au moins une caméra embarquée dont la particularité est de filmer l'intérieur de l'habitacle du véhicule.

Le serveur distant SDSD est de préférence apte à traiter les données émises par le TCU dans un but de les ordonner. Il comprend à cet effet un calculateur dédié. Le serveur peut être relié à un module de réception qui rend apte une telle communication de données. Les données ainsi reçues et traitées sont ensuite transmises à une interface graphique PAD qui permet à une personne initiée de lire les données qui ont été communiquées par le serveur distant SDSD. Une telle communication vers l'interface graphique PAD s'effectue préférentiellement via un protocole de communication utilisant un réseau adapté à la mobilité de l'équipement, tel que cela est le cas pour un réseau de type 3G ou 4G à titre d'exemple non limitatif.

Compte tenu de la nature particulière des données communiquées par le serveur distant SDSD, ladite interface graphique PAD est destinée à être manipulée par une personne qui fait préférentiellement partie d'une unité mobile de secours UMS dont l'une des fonctions premières est de porter assistance à une victime de la route, notamment un occupant d'un véhicule accidenté, et qui est qualifiée pour analyser et interpréter les données rendues visibles sur l'interface graphique PAD.

Une telle interface graphique PAD est remarquable en ce qu'elle permet en outre un suivi de l'information relative à l'état physiologique des occupants du véhicule accidenté antérieurement à l'arrivée de l'unité mobile de secours UMS sur les lieux mêmes de l'accident.

Une telle interface graphique PAD est remarquable en ce qu'elle permet, du fait d'itérations successives dans l'envoi des données concernant les occupants d'un véhicule, de rendre apte le suivi de leur état physiologique.

Comme cela est représenté plus en détails sur la **figure 2****,** le véhicule V peut comprendre une unité électronique de contrôle UEC qui est reliée électriquement à des organes de sécurité qui peuvent être par exemple des airbags ou des ceintures de sécurité, afin de rendre possible une communication de leur état physique, à savoir déployé ou non-déployé des airbags. Une telle UEC est remarquable en ce qu'elle peut identifier un dysfonctionnement d'un airbag résultant par exemple d'un état non-déployé malgré l'instruction de déploiement générée du fait du choc.

L'UEC peut également être en interface avec la TCU mais aussi avec une unité d'enregistrement, telle une mémoire interne qui de manière glissante est apte à mémoriser les différentes valeurs mesurées des paramètres de fonctionnement du véhicule lors de l'accident, comme par exemple la localisation géographique « GEO » ou la vitesse instantanée « VIT » de déplacement du véhicule.

L'identification du véhicule « VIN » peut également être mémorisée dans l'UEC.

Du fait de la communication entre l'UEC et la TCU, il est rendu possible une communication des données propres au véhicule vers le serveur distant SDSD.

A titre d'exemple, fort des données d'identification du véhicule, le serveur distant SDSD peut émettre une requête afin d'interroger un serveur de stockage de données contenant les données techniques relatives par exemple aux méthodes d'extraction des occupants selon la typologie de la caisse du véhicule, à la nature énergie utilisée au fonctionnement du groupe motopropulseur et ses dangers. De préférence, de telles données techniques sont réceptionnées par le serveur distant SDSD en vue d'une transmission à l'interface graphique PAD dans un but de communication à l'unité mobile de secours UMS.

De manière alternative, d'autres données peuvent également être obtenues par le serveur distant SDSD, lequel peut également être en communication avec une base de données dans laquelle peuvent être mémorisés des dossiers électroniques médicaux individuels DEMP quant à leur rattachement aux patients.

Ainsi, le système d'assistance selon l'invention peut de manière concomitante à l'envoi de données relatives à l'état physiologique d'un occupant, informer l'utilisateur via l'interface graphique PAD sur les antécédents pathologiques d'un occupant du véhicule accidenté éditée électroniquement sous la forme d'un dossier électronique médical individuel DEMP. Fort de ce renseignement, l'unité mobile de secours UMS est susceptible de prodiguer des secours d'une nature jusqu'alors jamais égalée du fait de la prise en considération du dossier électronique médical individuel DEMP de l'occupant antérieurement à son accident.

Bien entendu, une telle communication de l'information doit être contrôlée via un système de sécurité n'autorisant qu'un accès restreint du fait de la teneur hautement confidentielle de ce genre d'information. A cet effet, le système de sécurité peut recevoir une autorisation relative à la diffusion des informations médicales enregistrées.

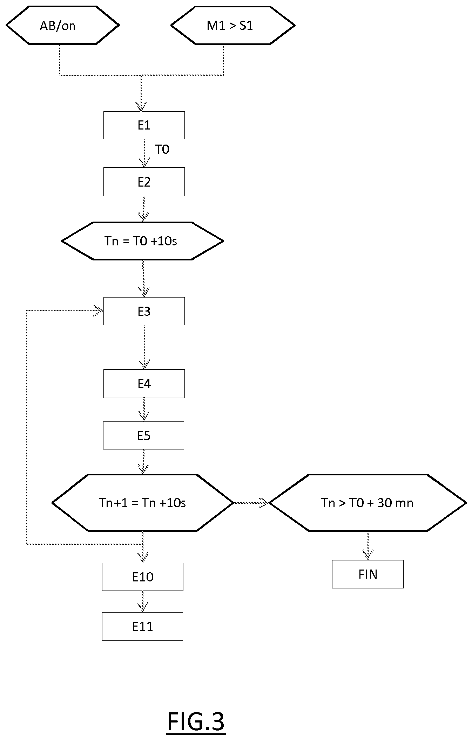

L'utilisation d'un tel système permet avantageusement la mise en œuvre du procédé d'assistance à au moins un occupant d'un véhicule accidenté qui comprend les étapes de l'algorithme de la **figure 3****.**

Le système fonctionnant de façon autonome, l'une des premières étapes consiste en une étape E1 de détection de la situation d'accident. Le système peut comprendre une détection d'un airbag déclenché - étape AB/on - ou une détection d'une décélération supérieure à une valeur de seuil prédéterminée - étape M1 > S1 - prises séparément ou cumulativement. L'état déclenché de l'airbag est une information connue de l'UEC de commande du déclenchement d'un airbag, laquelle est reliée à un capteur de décélération. Ce même capteur est apte à émettre une valeur instantanée de décélération qui peut être comparée à une valeur de seuil prédéterminée, de sorte qu'il est rendu possible à l'UEC d'avoir une image d'une situation d'accident du véhicule à un instant T0.

Suite à l'étape E1, le procédé comprend une étape d'activation E2 des moyens de mesure de l'état physiologique de l'occupant. Chacun des moyens de mesure de l'état physiologique incorporé dans l'habitacle est basculé d'un mode de veille à un mode actif de fonctionnement dans lequel il peut effectuer une mesure de l'état physiologique d'au moins un occupant. A titre d'exemple, dans le cas où lesdits moyens de mesure sont au moins un capteur incorporé à chaque ceinture de sécurité, ou dans le siège, un tel capteur est apte à mesurer la pulsation cardiaque ou la fréquence respiratoire, voire la pulsation cardiaque et la fréquence respiratoire d'au moins un occupant. Compte tenu que d'autres typologies de capteur peuvent être également utilisées, tel que par exemple une caméra de type thermique ou tout simplement une caméra vidéo, cette dernière est alors basculée dans un mode actif de fonctionnement afin d'opérer une relève des données physiologiques de l'occupant.

Selon le procédé de l'invention, il s'ensuit une étape E3 de relève effective des données relatives à l'état physiologique de l'occupant durant un laps de temps déterminé, ici de 10 secondes à titre d'exemple non limitatif.

Ainsi lorsque la condition Tn=T0+10s est vérifiée, il s'ensuit une étape E4 d'enregistrement des données dans l'UEC puis une étape d'envoi E5 d'un message contenant les données vers le serveur distant de stockage des données SDSD, via l'unité télématique de contrôle TCU, qui utilise une voie de communication traditionnelle de type 3G ou 4G.

Avantageusement, l'envoi des messages de données est effectué de manière répétitive, de préférence toutes les 10 secondes, et successive durant un laps de temps prédéterminé selon un intervalle de temps moyen mis par une unité mobile de premières interventions pour se rendre physiquement sur les lieux de l'accident après le premier signal d'alerte reçu. A titre d'exemple non limitatif, une telle valeur prédéterminée est ici d'une demi-heure. Par voie de conséquence, le véhicule émet toutes les 10 secondes un message à destination du serveur distant de stockage des données SDSD. Après chaque envoi, les étapes E3, E4 et E5 s'opèrent à nouveau.

Dès réception par le serveur distant de stockage des données SDSD, d'un message selon l'étape E5, le SDSD se doit d'informer les unités mobiles de premiers secours UMS. A cet effet, le procédé de l'invention comprend une étape E10 qui consiste en une étape E10 d'établissement d'une voie de communication d'informations entre le serveur distant de stockage des données SDSD et l'interface graphique PAD destinée à être utilisée par une unité mobile de secours UMS.

Une fois la liaison de communication établie, le SDSD transfère les données vers le PAD. Cette étape E11 permet à l'unité mobile de secours d'être informée de l'évolution de l'état physiologique des occupants du véhicule.

Selon d'autres variantes de réalisation du procédé objet de l'invention, il est possible d'ajouter d'autres informations particulièrement essentielles pour l'UMS.

Les variantes du procédé d'assistance objet de l'invention sont décrites ci-après. Le procédé d'assistance peut comprendre au moins l'une de ces variantes prises séparément ou cumulativement les unes avec les autres.

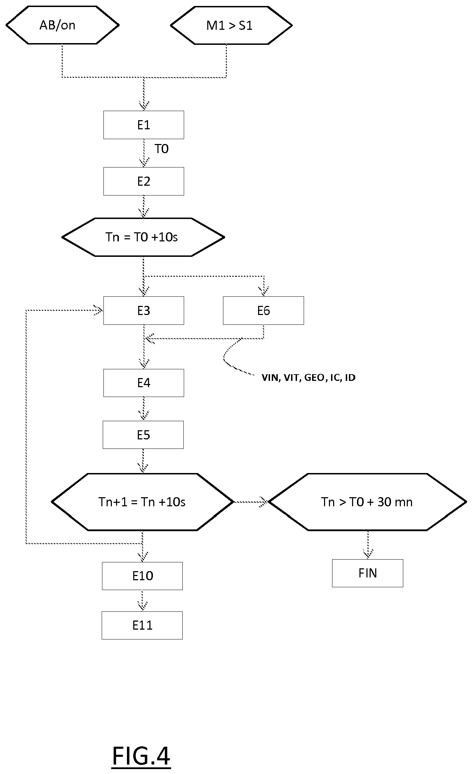

Selon une variante, comme cela est représenté sur l'algorithme de la **figure 4****,** le procédé reprend à l'identique les étapes du procédé de la figure 3, à ceci près qu'il comprend une étape E6 complémentaire de relève de données relatives au véhicule qui est réalisée en concomitance de l'étape E3 de relève des données physiologiques. Compte tenu du fait que ces données du véhicule ne varient pas dans le temps, de préférence l'étape E6 est réalisée une seule fois, en simultané de l'étape E3 qui consiste en la première relève de l'état physiologique de l'occupant.

Les données relatives au véhicule sont ainsi préférentiellement communiquées à la SDSD lors de la communication du premier message.

Préférentiellement, et de manière nullement limitative, les données relatives au véhicule prises séparément ou cumulativement sont les coordonnées de géolocalisation GEO, la vitesse instantanée VIT de déplacement du véhicule mesurée durant un instant prédéterminée précédent l'accident, qualifiée parfois de vitesse d'impact, ou l'identification du véhicule VIN. Compte tenu de la mesure de la vitesse VIT d'impact par l'UEC, ce dernier opère une détermination de l'intensité du choc IC selon une loi de calcul préenregistrée. Une telle donnée peut être utile aux unités mobiles de secours UMS pour anticiper le diagnostic du traumatisme corporel infligé à l'occupant du véhicule durant l'accident, avant l'arrivée de l'UMS sur le lieu de l'accident.

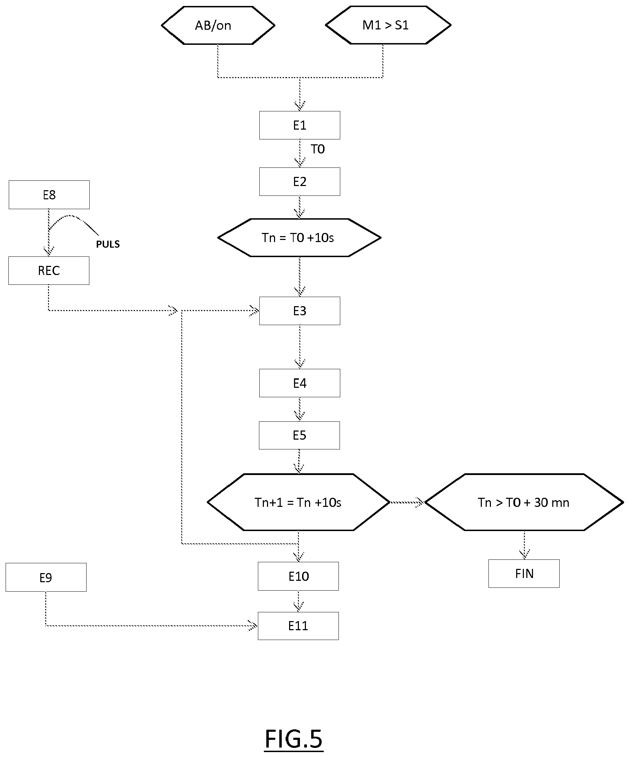

Selon une autre variante du procédé d'assistance représentée sur l'algorithme de la **figure 5****,** le procédé reprend à l'identique les étapes du procédé de la figure 3, à ceci près qu'il peut comprendre une phase d'identification ID de l'occupant. Le postulat de base bien connu qui établit que chaque individu est muni de sa propre identité cardiaque, le capteur de mesure de l'état physiologique est un outil remarquable en ce qu'il peut être utile dans cette identification. En effet, dans une phase initiale d'utilisation du véhicule, antérieure à l'utilisation du véhicule générant la situation d'accident, tout occupant peut être identifié via sa propre signature cardiaque. Une telle étape d'identification peut avoir lieu par une mesure volontaire de la pulsation cardiaque qui peut avoir lieu durant une étape d'enregistrement REC de chaque utilisateur du véhicule. Une telle étape d'identification peut être rendue effective par une activation du capteur dédié afin d'obtenir une identification de la signature cardiaque PULS qui est ensuite enregistrée dans la mémoire du véhicule à laquelle le TCU à accès via l'UEC.

Fort de cette signature cardiaque, la SDSD qui peut être en communication avec une base de données médicales dans laquelle sont archivés de nombreux dossiers électroniques médicaux individuels DEMP, dans un but de communication du contenu de ces derniers à l'unité mobile de secours UMS postérieurement à l'identification de l'occupant via sa signature cardiaque. Pour rendre opérationnelle une telle transmission de données hautement confidentielle, le procédé peut comprendre une étape E9 d'autorisation donnée au SDSD à des fins d'accès au dossier électronique médical individuel DEMP. L'étape d'envoi E11 des données du serveur distant de stockage des données SDSD vers l'interface graphique PAD peut ainsi contenir les données additionnelles, tel que le contenu du dossier électronique médical individuel DEMP.

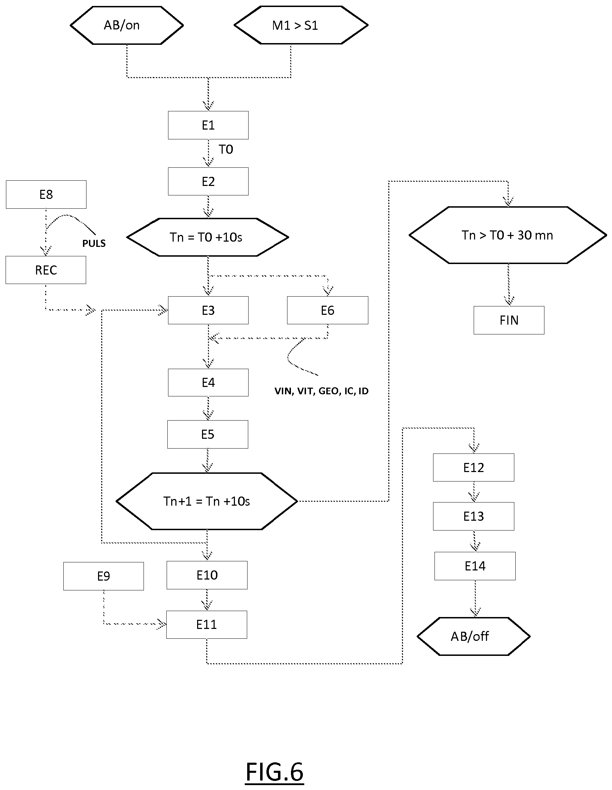

Selon une variante, comme cela est représenté sur l'algorithme de la **figure 6****,** le procédé reprend à l'identique les étapes du procédé de la figure 3 qui sont représentées en trait plein, à ceci près qu'il comprend une succession d'étapes additionnelles E12 à E14 dont le but est de permettre une communication entre le PAD en mode émetteur afin d'inhiber le fonctionnement d'un actionneur du véhicule, qui peut être à titre d'exemple non limitatif un airbag. Outre la possibilité offerte par le TCU d'émettre des messages de données vers le SDSD, le TCU est également apte à recevoir des données émises par le PAD via un protocole de communication de type Bluetooth® par exemple. L'avantage d'une telle communication est de permettre une communication entre l'émetteur incorporé au PAD et le récepteur du TCU du véhicule.

Cela permet avantageusement une commande visant à sécuriser les membres d'une unité mobile de secours UMS. Une situation de dangerosité avérée existe par exemple lorsqu'un airbag n'a pas été déclenché malgré l'ordre de déclenchement donné par l'UEC. La désincarcération d'un occupant d'un véhicule accidenté peut alors se révéler être dangereuse pour un membre de l'unité mobile de secours.

L'utilisation du PAD comme moyen de communication avec le véhicule permet une commande à distance des actionneurs électriques, tel un airbag, via le TCU. Il devient alors possible d'annuler l'ordre de déclenchement, ce qui revient à forcer les airbags dans un mode de fonctionnement d'arrêt, sécurisant par voie de fait l'intervention de l'unité mobile de secours.

Ainsi, lorsque l'unité mobile de secours UMS est dépêchée sur le lieu de l'accident, l'interface graphique PAD est utilisée dans une étape E12 d'établissement d'une communication distante vers le véhicule, notamment vers l'unité de contrôle télémétrique TCU, via le protocole de communication Bluetooth®. Une fois l'appareillage du PAD au TCU, une étape d'envoi E13 de l'interface graphique PAD vers l'unité de contrôle télémétrique TCU d'un message de commande d'un actionneur électrique est réalisée. Les données relatives au véhicule considéré émanent du serveur de stockage de données constructeur qui ont été au préalable communiquées à l'étape E10.

Il s'ensuit une étape E14 de transmission du message de commande d'arrêt d'un airbag, par exemple, via le TCU et l'UEC à laquelle ledit airbag considéré est relié électroniquement. Il devient ainsi possible de forcer l'arrêt d'un airbag ayant un état de fonctionnement jugé instable par les membres de l'unité mobile de secours UMS.

Alternativement, le PAD peut commander tout autre type d'actionneur compris dans le véhicule, tel que par exemple et de manière non limitative, les clignotants, le déverrouillage des portes, la commande d'ouverture et de fermeture des vitres du véhicule, voire même l'arrêt du moteur.

L'algorithme de la figure 6 peut également comprendre l'étape E6, ou l'ensemble des étapes E8 et REC, ou l'étape E9, prises séparément ou de manière cumulative, de telles étapes ayant été décrites précédemment en référence aux figures 4 et 5. Etant donné le caractère optionnel des étapes E6, E8, REC et E9 dans le procédé d'assistance, l'algorithme de la figure 6 représente les étapes E6, E8, REC et E9 en trait mixte.

Il est à noter que d'autres modes de réalisation du système de mise en œuvre du procédé d'assistance selon l'invention et du procédé d'assistance selon l'invention que ceux décris précédemment sont envisageables. Notamment les étapes E1 à E14 ne sont pas toutes indispensables pour réaliser l'invention, et certaines de ces étapes, ou la façon dont elles sont ordonnées, sont réalisables différemment.

## Revendications

1. Procédé d'assistance à au moins un occupant d'un véhicule accidenté comportant une étape de détection (E1) d'un état accidenté du véhicule (V), une étape d'activation (E2) des moyens de mesure de l'état physiologique de l'occupant, une étape de relève (E3) des données physiologiques de l'occupant par au moins un dispositif de mesure dédié, une étape d'enregistrement (E4) des données relevées, une étape d'envoi (E5) d'un message contenant les données relatives à l'état physiologique de l'occupant vers un serveur distant de stockage des données (SDSD), via une unité de contrôle télématique (TCU) embarquée dans le véhicule, **caractérisé en ce que** l'étape (E3) de relève des données physiologiques s'effectue de manière récurrente à intervalle de temps régulier à partir de l'instant (T0) de détection (E1) d'un état accidenté du véhicule, et **en ce que** l'étape d'envoi (E5) d'un message s'effectue automatiquement après chaque enregistrement (E4) des données relevées à l'étape (E3) de relève des données.

2. Procédé d'assistance selon la revendication 1, **caractérisé en ce que** l'étape de détection (E1) d'un état accidenté du véhicule (V) consiste en une identification de l'état déclenché (AB-on) d'au moins un airbag ou en une identification d'une valeur de la mesure instantanée (M1) d'un décéléromètre embarqué dans le véhicule supérieure à une valeur de seuil (S1) prédéterminée.

3. Procédé d'assistance selon la revendication 1 ou 2, **caractérisé en ce qu'**il comprend une étape de relève (E6) de données relatives au véhicule réalisée en concomitance de l'étape (E3) de relève des données physiologiques de l'occupant.

4. Procédé d'assistance selon la revendication 3, **caractérisé en ce que** les données relatives à l'état du véhicule sont les coordonnées de géolocalisation (GEO) et/ou la vitesse instantanée (VIT) de déplacement du véhicule mesurée durant un instant prédéterminé (T0-t1) précédent l'accident et/ou l'identification du véhicule (VIN) et/ou l'intensité du choc (IC) et/ou l'état de chacun des airbags (AB).

5. Procédé d'assistance selon la revendication 4, **caractérisé en ce que** le serveur distant de stockage des données (SDSD) est apte à recevoir des données du constructeur concernant des caractéristiques relatives au véhicule accidenté (VIN).

6. Procédé d'assistance selon l'une quelconque des revendications 1 à 5, **caractérisé en ce qu'**il comprend une étape préliminaire d'identification (ID) de l'occupant consistant notamment en une demande d'identification comprenant une étape de relève (E8) de la signature cardiaque (PULS) de l'occupant par au moins un dispositif de mesure dédié, une étape enregistrement (REC) dans une mémoire du véhicule.

7. Procédé d'assistance selon la revendication 6, **caractérisé en ce qu'**il comprend une étape d'autorisation (E9) permettant au serveur distant de stockage des données (SDSD) d'accéder à un dossier électronique médical individuel (DEMP) rattaché à l'occupant identifié (ID).

8. Procédé d'assistance selon l'une quelconque des revendications 1 à 7, **caractérisé en ce qu'**il comprend une étape d'établissement (E10) d'une voie de communication d'informations entre le serveur distant de stockage des données (SDSD) et une interface graphique (PAD) destinée à être utilisée par une unité mobile de secours (UMS), une étape d'envoi (E11) des données du serveur distant de stockage des données (SDSD) vers l'interface graphique (PAD) de manière à permettre un suivi de l'évolution de l'état physiologique de chacun des occupants du véhicule accidenté.

9. Système d'assistance à au moins un occupant d'un véhicule accidenté, **caractérisé en ce qu'**il comporte des moyens de mise en œuvre du procédé d'assistance selon l'une quelconque des revendications 1 à 8, lesdits moyens comportant :
- au moins un capteur de mesure de l'état physiologique d'au moins l'un des occupants d'un véhicule
- une unité de contrôle télématique (TCU) embarquée dans le véhicule communicant avec ledit capteur,
- un serveur distant de stockage des données (SDSD) équipé d'au moins un calculateur et un émetteur/récepteur de données destiné à recevoir des données émises par une unité de contrôle télématique (TCU) embarquée dans le véhicule et/ou par au moins une base de données externe contenant les données relatives au véhicule accidenté et/ou au dossier électronique médical individuel (DEMP) d'un occupant identifié,
- une interface graphique comportant au moins un calculateur et un émetteur/récepteur de données (PAD) apte à communiquer avec le serveur distant de stockage des données (SDSD) pour permettre un suivi de l'évolution de l'état physiologique d'au moins un occupant du véhicule.

## Patentansprüche

1. Verfahren zur Unterstützung von mindestens einem Insassen eines von einem Unfall betroffenen Fahrzeugs, welches einen Schritt der Detektion (E1) eines verunfallten Zustands des Fahrzeugs (V), einen Schritt der Aktivierung (E2) der Mittel zur Messung des physiologischen Zustands des Insassen, einen Schritt der Erfassung (E3) der physiologischen Daten des Insassen durch mindestens eine spezielle Messvorrichtung, einen Schritt der Speicherung (E4) der erfassten Daten und einen Schritt des Sendens (E5) einer Nachricht, welche die auf den physiologischen Zustand des Insassen bezogenen Daten enthält, an einen entfernten Datenspeicherserver (SDSD) über ein an Bord des Fahrzeugs mitgeführtes Telematiksteuergerät (TCU) umfasst, **dadurch gekennzeichnet, dass** der Schritt (E3) der Erfassung der physiologischen Daten ab dem Zeitpunkt (T0) der Detektion (E1) eines verunfallten Zustands des Fahrzeugs wiederholt in regelmäßigen Zeitabständen ausgeführt wird, und dadurch, dass der Schritt des Sendens (E5) einer Nachricht automatisch nach jeder Aufzeichnung (E4) der Daten ausgeführt wird, die im Schritt (E3) der Erfassung der Daten erfasst wurden.

2. Verfahren zur Unterstützung nach Anspruch 1, **dadurch gekennzeichnet, dass** der Schritt der Detektion (E1) eines verunfallten Zustands des Fahrzeugs (V) in einer Identifikation des ausgelösten Zustands (AB-on) wenigstens eines Airbags oder in einer Identifikation eines augenblicklichen Messwertes (M1) eines an Bord des Fahrzeugs mitgeführten Verzögerungsmessers, der größer als ein vorbestimmter Schwellenwert (S1) ist, besteht.

3. Verfahren zur Unterstützung nach Anspruch 1 oder 2, **dadurch gekennzeichnet, dass** es einen Schritt der Erfassung (E6) von auf das Fahrzeug bezogenen Daten umfasst, der gleichzeitig mit dem Schritt (E3) der Erfassung der physiologischen Daten des Insassen durchgeführt wird.

4. Verfahren zur Unterstützung nach Anspruch 3, **dadurch gekennzeichnet, dass** die auf den Zustand des Fahrzeugs bezogenen Daten die Geolokationskoordinaten (GEO) und/oder die momentane Fahrgeschwindigkeit (VIT) des Fahrzeugs, die zu einem vorbestimmten Zeitpunkt (T0-t1) vor dem Unfall gemessen wurde, und/oder die Identifizierungsnummer des Fahrzeugs (VIN) und/oder die Stärke des Aufpralls (IC) und/oder der Zustand jedes der Airbags (AB) sind.

5. Verfahren zur Unterstützung nach Anspruch 4, **dadurch gekennzeichnet, dass** der entfernte Datenspeicherserver (SDSD) geeignet ist, Daten des Herstellers zu empfangen, die Merkmale betreffen, die sich auf das von einem Unfall betroffene Fahrzeug beziehen (VIN).

6. Verfahren zur Unterstützung nach einem der Ansprüche 1 bis 5, **dadurch gekennzeichnet, dass** es einen vorausgehenden Schritt der Identifizierung (ID) des Insassen umfasst, der insbesondere in einer Identifizierungsanforderung besteht, die einen Schritt der Erfassung (E8) der Herzsignatur (PULS) des Insassen durch wenigstens eine spezielle Messvorrichtung und einen Schritt des Ablegens (REC) in einem Speicher des Fahrzeugs umfasst.

7. Verfahren zur Unterstützung nach Anspruch 6, **dadurch gekennzeichnet, dass** es einen Schritt der Autorisierung (E9) umfasst, der dem entfernten Datenspeicherserver (SDSD) ermöglicht, auf eine individuelle medizinische elektronische Akte (DEMP) zuzugreifen, die dem identifizierten Insassen (ID) zugeordnet ist.

8. Verfahren zur Unterstützung nach einem der Ansprüche 1 bis 7, **dadurch gekennzeichnet, dass** es einen Schritt der Einrichtung (E10) eines Weges der Informationsübermittlung zwischen dem entfernten Datenspeicherserver (SDSD) und einer grafischen Oberfläche (PAD), die dazu bestimmt ist, von einem mobilen Rettungsteam (UMS) benutzt zu werden, und einen Schritt des Sendens (E11) der Daten des entfernten Datenspeicherservers (SDSD) an die grafische Oberfläche (PAD), um eine Verfolgung der Entwicklung des physiologischen Zustands jedes der Insassen des von einem Unfall betroffenen Fahrzeugs zu ermöglichen, umfasst.

9. System zur Unterstützung von mindestens einem Insassen eines von einem Unfall betroffenen Fahrzeugs, **dadurch gekennzeichnet, dass** es Mittel zur Durchführung des Verfahrens zur Unterstützung nach einem der Ansprüche 1 bis 8 umfasst, wobei die Mittel umfassen:
- mindestens einen Sensor zur Messung des physiologischen Zustands mindestens eines der Insassen eines Fahrzeugs,
- ein an Bord des Fahrzeugs mitgeführtes Telematiksteuergerät (TCU), das mit dem Sensor kommuniziert,
- einen entfernten Datenspeicherserver (SDSD), der mit mindestens einem Rechner und einem Sender/Empfänger von Daten ausgestattet ist, der dazu bestimmt ist, Daten zu empfangen, die von einem an Bord des Fahrzeugs mitgeführten Telematiksteuergerät (TCU) und/oder von mindestens einer externen Datenbank, die Daten enthält, die sich auf das von einem Unfall betroffene Fahrzeug und/oder auf die individuelle medizinische elektronische Akte (DEMP) eines identifizierten Insassen beziehen, gesendet wurden,
- eine grafische Oberfläche, die mindestens einen Rechner und einen Sender/Empfänger von Daten (PAD), der geeignet ist, mit dem entfernten Datenspeicherserver (SDSD) zu kommunizieren, um eine Verfolgung der Entwicklung des physiologischen Zustands mindestens eines Insassen des Fahrzeugs zu ermöglichen, umfasst.

## Claims

1. Method of assistance to at least one occupant of a vehicle involved in an accident, comprising a detection step (E1) for detecting a state of the vehicle (V) resulting from the accident, an activation step (E2) for activating the means for measuring the physiological state of the occupant, a collection step (E3) for collecting the physiological data relating to the occupant by at least one dedicated measurement device, a recording step (E4) for recording the data collected, a sending step (E5) for sending a message containing the data relating to the physiological state of the occupant to a remote data storage server (SDSD), via a telematic control unit (TCU) on board the vehicle, **characterized in that** the collection step (E3) for collecting the physiological data is carried out recurrently at a regular time interval from the time (T0) of detecting (E1) a state of the vehicle resulting from the accident, and **in that** the sending step (E5) for sending a message is carried out automatically after each recording (E4) of the data collected in the data collection step (E3).

2. Assistance method according to Claim 1, **characterized in that** the detection step (E1) for detecting a state of the vehicle (V) resulting from the accident consists of identifying the triggered state (AB-on) of at least one airbag or of identifying a value, from the instantaneous measurement (M1) by a decelerometer on board the vehicle, which is greater than a predetermined threshold value (S1).

3. Assistance method according to Claim 1 or 2, **characterized in that** it comprises a collection step (E6) for collecting data relating to the vehicle carried out concomitantly with the collection step (E3) for collecting the physiological data relating to the occupant.

4. Assistance method according to Claim 3, **characterized in that** the data relating to the state of the vehicle are the geo-tracking coordinates (GEO) and/or the instantaneous speed (VIT) of displacement of the vehicle, measured over a predetermined time period (TO-tl) preceding the accident, and/or the identification of the vehicle (VIN) and/or the intensity of the impact (IC) and/or the state of each of the airbags (AB).

5. Assistance method according to Claim 4, **characterized in that** the remote data storage server (SDSD) is capable of receiving manufacturer data regarding features relating to the vehicle (VIN) involved in the accident.

6. Assistance method according to any one of Claims 1 to 5, **characterized in that** it comprises a preliminary identification step (ID) for identifying the occupant, which consists in particular of an identification request comprising a collection step (E8) for collecting the cardiac signature (PULS) of the occupant by at least one dedicated measurement device and a step (REC) for recording in a memory of the vehicle.

7. Assistance method according to Claim 6, **characterized in that** it comprises an authorization step (E9) enabling the remote data storage server (SDSD) to access an individual electronic medical file (DEMP) relating to the occupant identified (ID).

8. Assistance method according to any one of Claims 1 to 7, **characterized in that** it comprises an establishment step (E10) for establishing an information communication path between the remote data storage server (SDSD) and a graphical interface (PAD) intended to be used by a mobile rescue unit (UMS), a sending step (E11) for sending the data in the remote data storage server (SDSD) to the graphical interface (PAD) in such a way as to allow monitoring of the change in the physiological state of each of the occupants of the vehicle involved in the accident.

9. System of assistance to at least one occupant of a vehicle involved in an accident, **characterized in that** it comprises means for implementing the assistance method according to any one of Claims 1 to 8, said means comprising:
- at least one sensor for measuring the physiological state of at least one of the occupants of a vehicle;
- a telematic control unit (TCU) on board the vehicle communicating with said sensor;
- a remote data storage server (SDSD) equipped with at least one computer and a data transmitter/receiver intended to receive data sent by a telematic control unit (TCU) on board the vehicle and/or by at least one external database containing the data relating to the vehicle involved in the accident and/or to the individual electronic medical file (DEMP) of an occupant identified; and
- a graphical interface comprising at least one computer and a data transmitter/receiver (PAD) capable of communicating with the remote data storage server (SDSD) in order to allow monitoring of the change in the physiological state of at least one occupant of the vehicle.
